# EUROPEAN PATENT APPLICATION

(11) **EP 2 048 728 A1**
(43) Date of publication of application: **15.04.2009**
(21) Application number: 07721376.7
(22) Date of filing: 07.06.2007
(51) Int. Cl.: H01M 4/62, H01M 4/32

(54) **A HIGH-TEMPERATURE COMPOSITE ADDITIVES FOR THE NICKEL HYDROGEN RECHARGEABLE BATTERY**

(30) Priority: 27.07.2006 CN 200610061895
(71) Applicant: Lexel Battery (Shenzhen) Co., Ltd., Shenzhen, Guangdong 518105 (CN)
(72) Inventor: GAO, Xuefeng, Guangdong 518105 (CN); XIE, Xun, Guangdong 518105 (CN); ZHANG, Ping, Guangdong 518105 (CN); LIAO, Shi, Guangdong 518105 (CN); YANG, Yanqiu, Guangdong 518105 (CN)
(74) Representative: Wächter, Jochen
(86) International application number: PCT/CN2007/001803
(87) International publication number: WO 2008/014663

(57) **Abstract**

The present invention relates to a high-temperature composite additive for nickel-based batteries. Its technical purpose is to improve the conversion efficiency of trickle charging for batteries under high temperature. The weight-based components for the high-temperature composite additive for nickel-based batteries include 100 parts of nickel hydroxide and 0.1-10 parts of each one substance selected from any two groups/categories of elemental substances or compounds of rare-earth elements, elemental substances or compounds of IVB group elements or elemental substances or compounds of IVA group elements. Compared with prior art, the present invention leverages addition of high-temperature composite additive to substantially improve the conversion level of positive electrode activating substances under high temperature and improve oxygen evolution overpotentials. As a result, it can improve conversion efficiency of trickle charging under high temperature by 20-50% and accomplish normal operation for batteries under 80°C environment. This helps expand applications of batteries and in addition, manufacturing process for batteries is simple and battery structure is the same as general nickel-hydrogen batteries, making operation an easy job.

## Description

### Technical Field

The present invention relates to an additive for chargeable batteries, and more particularly, to an additive for nickel-based chargeable batteries.

### Background

Nickel-based batteries, including nickel-nitrogen, nickel-cadmium and nickel-zinc chargeable batteries with nickel hydroxide/nickel oxyhydroxide as electrodes, have a full range of advantages such as high energy density, long service life, compact size, light weight, ease of operation, reliability and cost-effectiveness, thus finding increasingly more applications in various sectors. However, such batteries have disadvantages in charging performance under high temperature, which restricts their applications. The key bottleneck is charging deficiency under high temperature. For trickle charging of ordinary nickel-based batteries under environment above 45°C, its capacity is 50% of nominal capacity or even lower. However, in such applications as emergency lighting, outdoor solar application and HEV, operating temperature for batteries may reach 45°C or up to 80°C. Therefore, to extend the applications of nickel-based batteries, the key is to improve their charging performance under high temperature.

In charging, the positive electrodes of nickel-based batteries experience the following two concurrent chemical reactions:

Charging reaction: Ni(OH)₂+OH⁻ = NiOOH+ H₂O + e⁻ (1)

Oxygen evolution reaction: 4OH⁻ = 2H₂O+O₂+ 4e⁻ (2)

When charging nickel-based batteries under 25°C or lower temperature until electric charge reaches 90%, equation (2) accounts for a low ratio of the process and the charging of most electric energy occurs in the process of equation (1). When temperature goes up, the process of equation (2) tends to occur. Specifically, oxygen evolution reaction begins to occur when charged energy reaches 50% or below and oxygen thus precipitated disperses on negative electrodes where chemical reaction occurs as follows:

1/2O₂ + 2MH = H₂O + Energy (3)

This leads to even higher temperature in batteries and further promotes oxygen evolution reaction. As a result, this leads to a vicious cycle where charged energy is mostly used for oxygen evolution reaction, causing incomplete charging reaction for positive electrodes and low discharging capacity for batteries. To improve the capacity utilization rate of batteries under high temperature (i.e., actual discharging capacity / nominal capacity), one approach is to promote charging reaction to coprecipitate 5%wt cobalt hydroxide in nickel hydroxide as disclosed in China Patent Application No. 97117716.3; Another approach is to add chemical substances that can retard oxygen evolution reaction, for example, to add 1-5%wt titanium compound on positive electrodes as disclosed in China Patent Application No. 99116113.0, or select a compound composed of at least two elements from the base group composed of yttrium, erbium and ytterbium and add 0.1-5%wt such compound on positive electrodes as disclosed in China Patent Application No. 97120505.1, or add zirconium element on positive electrodes as disclosed in China Patent Application No. 200510040591.6. Application of these technologies may substantially improve the charging performance of nickel-based batteries under high temperature. However, for trickle charging under 80°C, i.e., when charging at 0.05 ratio current for 48 hours, its capacity utilization rate can only reach 40%. This means it cannot reach the level for normal operation. Specifically, the conversion efficiency for trickle charging under high temperature for nickel-based chargeable batteries is very low.

### Summary of the Invention

One objective of the present invention is to provide a high-temperature composite additive for nickel-based chargeable batteries to improve the conversion efficiency of trickle charging for batteries under high temperature.

The present invention adopts the following technical solution: a high-temperature composite additive for nickel-based chargeable batteries, wherein its weight-based components include 100 parts of nickel hydroxide and 0.1-10 parts of each one substance selected from any two groups/categories of elemental substances or compounds of rare-earth elements, elemental substances or compounds of IVB group elements or elemental substances or compounds of IVA group elements.

The high-temperature composite additive for nickel-based chargeable batteries of present invention includes 0.1-10 parts of each substance selected from 3 groups/categories, i.e., elemental substances or compounds of rare-earth elements, elemental substances or compounds of IVB group elements or elemental substances or compounds of IVA group elements.

The rare-earth elements of present invention are yttrium, ytterbium or erbium element.

The compounds of yttrium, ytterbium and erbium of present invention are Y₂O₃, Y(OH)₃, Yb₂O₃, Yb(OH)₃, ErO₂, Er₂O₃ and Er(OH)₃.

The IVB group elements of present invention are titanium and zirconium elements.

The compounds of titanium and zirconium of present invention are Ti(OH)₃, Ti(OH)₂, Ti₂O₃, TiO₂, TiO, Ti₃O₅, Zr(OH)₃, Zr(OH)₂, Zr₂O₃, ZrO₂, ZrO and Zr₃O₅.

The IIA group elements of present invention are calcium and magnesium elements.

The compounds of calcium and magnesium of present invention are CaO, Ca(OH)₂, MgO and Mg(OH)₂.

Preferred weight part of the components selected from elemental substances or compounds of rare-earth elements, elemental substances or compounds of IVB group elements and elemental substances or compounds of IVA group elements is 0.5-5 parts.

By adding high-temperature composite additive whose composition includes at least one elemental substance or compound of such rare-earth elements as yttrium, erbium and ytterbium, at least one elemental substance or compound of such IIA group elements such as titanium and zirconium, and at least one elemental substance or compound of such IVB group elements as calcium and magnesium, the present invention can substantially reduce the conversion level of activating substances on positive electrodes under high temperature, improve conversion efficiency of trickle charging under high temperature by 20-50% and ensure normal operation for batteries under 80°C, which means a substantial improvement compared with prior art. This helps expand applications of batteries. In addition, manufacturing process for batteries is simple and battery structure is the same as general nickel-hydrogen batteries, making operation an easy job.

### Examples

Below is a detailed description of the present invention in conjunction with examples.

From elemental substance or compound of rare-earth elements yttrium, ytterbium and erbium such as Y₂O, Y(OH)₃, Yb₂O, Yb(OH)₃, ErO, Er₂O and Er(OH)₃, from IVB group elements titanium and zirconium such as Ti(OH)₃, Ti(OH)₂, Ti₂O, TiO, TiO, Ti₃O, Zr(OH)₃, Zr(OH)₂, Zr₂O, ZrO, ZrO and Zr₃O, and from IIA group elements calcium and magnesium such as CaO, Ca(OH)₂, MgO and Mg(OH)₂, select one substance from any group/category based on 0.1-10 parts in weight and 100 parts of Ni(OH)₂ and add them to batteries as control group; select one substance from any II group/category or III group/category based on 0.1-10 parts in weight and 100 parts of Ni(OH)₂ and add them to batteries as implementation group.

### Comparative example 1

Preparation of nickel positive electrodes: Mix 100 parts of spheric Ni(OH)₂, 5 parts of TiO and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Comparative example 2

Preparation of nickel positive electrodes: Mix 100 parts of spheric Ni(OH)₂, 5 parts of ErO₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Comparative example 3

Preparation of nickel positive electrodes: Mix 100 parts of spheric Ni(OH)₂, 5 parts of Ca(OH)₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 1

Preparation of nickel positive electrodes: Mix 100 parts of spheric Ni(OH)₂, 2.5 parts of ErO₂, 2.5 parts of TiO₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 2

Preparation of nickel positive electrodes: Mix 100 parts of spheric Ni(OH)₂, 2.5 parts of Ca(OH)₂, 2.5 parts of TiO₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 3

Preparation of nickel positive electrodes: Mix 100 parts of spheric Ni(OH)₂, 2.5 parts of Ca(OH)₂, 2.5 parts of ErO₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 4

Preparation of nickel positive electrodes: Mix 100 parts of spheric Ni(OH)₂, 2 parts of ErO₂, 2 parts of TiO₂, 1 part of Ca(OH)₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 5

Preparation of nickel positive electrodes: Mix 100 parts of spheric Ni(OH)₂, 1 part of ErO₂, 5 parts of Ti powder, 0.5 part of Ca(OH)₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 6

Preparation of nickel positive electrodes: Mix 100 parts of spheric Ni(OH)₂, 0.1 part of Y powder, 5 parts of TiO₂, 1 part of Ca(OH)₂ and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

### Example 7

Preparation of nickel positive electrodes: Mix 100 parts of spheric Ni(OH)₂, 0.5 part of ErO₂, 10, parts of TiO₂, 0.5 part of Mg powder and 30 parts of 1% EMC adhesive based on weight into paste-like compound, and fill them to foamed nickel matrix; then cut them into positive electrodes for AAA 600mAh batteries after drying and rolling. Preparation of negative electrodes: Mix 100 parts of hydrogen storage alloy MmNi5 (activating substances for negative electrodes) and 12 parts of 2.75% EMC adhesive into paste-like compound and coat them onto 0.04mm-thick punched nickel-plated steal bands; and cut them into negative electrodes based on AAA 600mAh battery size after drying and rolling. Preparation of batteries: Sandwich polypropylene membrane between positive and negative nickel electrodes; wind them into whirl-shaped electrode groups; assemble electrode groups in circular metal enclosures; inject KOH, NaOH and LiOH three-component electrolyte; spot-weld caps to seal up; charge 16 hours with 60mA; discharge with 120mA until voltage difference between both ends of positive and negative electrodes is 1.0V; continue this for two weeks to make batteries after full activation.

Take batteries from comparative examples and examples after activation and stabilization and charge them with 60mA for 16 hours under room temperature; lay them idle for one hour and discharge them with 120mA until voltage difference between both ends of positive and negative electrodes is 1.0V where their initial capacity measures C₀ mAh; charge them with 60mA for 48 hours under 60°C and 80°C, lay them idle for one hour and discharge them with 120mA until voltage difference between both ends of positive and negative electrodes is 1.0V where their discharging capacity measures C₁ mAh and C₂ mAh; use equation η = (C₁/C₀) × 100%, (C₂/C₀) ×100% to calculate their charging conversion efficiency under 60°C and 80°C. The comparative result of capacity and charging efficiency η for aforesaid comparative examples and examples is as shown in Table 1.

The above examples only outline examples using elemental oxide or hydroxide as additive. Since additive is generated in the process of solution and redeposition of elemental cation and plays its role via oxide/hydroxide deposition on the surface of nickel hydroxide, all compounds that can provide elemental cation under the environment of alkaline hydrolyte can be used as additives, such as elemental substances of oxide/hydroxide that generate elements via reaction with salty and alkaline electrolytes. Naturally, it is required to ensure anion does no harm to batteries. Similarly, these additives can be added to activating substances for positive electrodes and in addition, they can be added to negative electrodes, membranes or electrolytes where they can pass the barrier of oxygen evolution side reaction generated on the surface of nickel hydroxide in the process of cation solution and redeposition. Therefore, their effect is the same.

Rare-earth elements include lanthanide element and yttrium/ytterbium elements. The valence-shell electronic configuration for yttrium, ytterbium and lanthanide atoms is (n-1)d¹ns² and the total number of electrons in the highest energy-level group of external electrons is 3 for all of them. However, they generate compounds with +3 in oxidation state after losing 3 electrons. Therefore, they are similar to each other in nature. In addition, f electron exists in the ground-state electronic shell for all atoms of lanthanide elements except lanthanide atoms. Though lanthanide does not have f electron, yet the outermost two electronic shells for all other elements in the lanthanide system have strong shielding effect on 4f orbits. Therefore, though the number of electrons on 4f energy level is different, their chemical nature is subject to insignificant impact from the number of 4f electrons. Therefore, they are similar to each other in chemical nature. To sum up, the elemental substances and compounds in addition to all other rare-earth elements except yttrium, ytterbium and lanthanide are also applicable to the present invention.

The valence shell structure of IVB group elemental atoms is (n-1)d²ns² and the total number of electrons in the highest energy-level group of external electrons is 4 for all of them. Since atomic structure is relatively stable when d orbit is fully vacant (d⁰) status, two d electrons at secondary outer layer also participate in bond formation in addition to two s electrons in outermost layer that participate in bond formation. They have similar nature. Due to impact from lanthanide shrinkage, zirconium and hafnium have similar atom radius and ion radius and accordingly, they have similar chemical nature. Therefore, in addition to titanium and zirconium, the elemental substances and compounds of other IVB group elements are also applicable to the present invention.

The outermost electronic arrangement for IIA group elemental metal atoms is ns² and they have strong reducibility. For IIA group elements, the number of electrons at outermost layer is 2. As a result, they have similar nature. Therefore, in addition to calcium and magnesium, the compounds of other IIA group elements are also applicable to the present invention.

Elemental substances of IIA group elements and rare-earth elements feature strong reducibility. After adding to battery system, they cannot exist in a stable manner but in the form of oxidized compounds. Therefore, elemental substances or compounds are also applicable to the present invention.

As reported in "Batteries International" journal, exclusive addition of rare-earth elements, IVB group elements or IIB group elements retard the occurrence of oxygen evolution side reaction via solution - redeposition of oxide/hydroxide that generates such elements on nickel hydroxide. The present invention shows concurrent addition of two categories or three categories of elements features substantial improvement compared with addition of single category of elements. However, their mechanism is still unknown at present. As estimated, the reason may be that multiple categories of elemental cations with different external electronic structures may retard the occurrence of oxygen evolution side reaction.

For the high-temperature composite additives for nickel-based chargeable batteries in the present invention, their components include at least element selected from IIA group, IVB group and rare-earth elements in the periodical table of elements, which are added to chargeable nickel-based batteries as elemental substances or compounds. Unlike elemental substances or compounds with addition of elements from single group/category, the present invention leverages surface coprecipitation or packing on nickel-hydroxide positive electrodes to prevent aggregation between additives and aggregation between positive electrode materials. In this way, they can make best use of the volatile property of additives and improve the charging conversion efficiency of activating substances. This can help achieve optimal effect in improving the utilization rate of positive electrode activating substances. That's to say, compared with single-compound additives, these high-temperature composite additives can further improve oxygen evolution overpotentials of positive electrodes. Addition of high-temperature composite additives to activating substance hydrogen storage alloy for negative electrodes can help improve the property of hydrogen storage alloy electrodes.

When the high-temperature composite additives for nickel-based batteries in the present invention coprecipitate or pack on the surface of positive electrode nickel hydroxide, or are mechanically mixed in positive electrode activating substances, or distributed in negative electrode activating substances, or when membrane surface contains soluble compounds of IIA group, IVB group and rare-earth metal, such compounds can dissolve and exist in alkaline electrolytes and they are distributed in positive/negative electrodes and membranes in response to the dispersion of electrolytes. As a result, they can promote even charging reaction, improve oxygen generated potentials and improve the capacity to inhibit oxygen evolution reaction. Meanwhile, they can also improve the charging reaction to convert nickel oxide into nickel hydroxide.

**Table 1. Comparison of capacity with charging efficiency η**

| Battery | Comparative example 1 | Comparative example 1 | Comparative example 1 | Example 1 | Example 1 | Example 2 | Example 4 | Example 5 | Example 6 | Example 7 |
|---|---|---|---|---|---|---|---|---|---|---|
| Capacity at normal temperature, C₀ | 613.2 | 619.8 | 613.6 | 623.5 | 609.8 | 628.7 | 621.1 | 618.9 | 612.8 | 602.7 |
| Capacity at 60°C, C₁ 60°C, C₁ | 383.3 | 404.7 | 359.6 | 549.9 | 508.6 | 570.2 | 616.1 | 579.9 | 563.8 | 573.2 |
| Charging efficiency η at 60°C | 62.5% | 65.3% | 58.6% | 88.2% | 83.4% | 90.7% | 99.2% | 93.7% | 92.0% | 95.1% |
| Capacity at 80°C, C₂ 80°C, C₂ | 249.0 | 264.7 | 223.4 | 339.2 | 354.3 | 357.7 | 485.7 | 375.7 | 362.8 | 377.3 |
| Charging efficiency η at 80°C | 40.6% | 42.7% | 36.4% | 54.4% | 58.1% | 56.9% | 78.2% | 60.7% | 59.2% | 62.6% |

## Claims

1. A high-temperature composite additive for nickel-based chargeable batteries, wherein its weight-based components include 100 parts of nickel hydroxide and 0.1-10 parts of each one substance selected from any two groups/categories of elemental substances or compounds of rare-earth elements, elemental substances or compounds of IVB group elements or elemental substances or compounds of IVA group elements.

2. The high-temperature composite additive for nickel-based chargeable batteries as described in Claim 1, wherein the high-temperature composite additive for nickel-based chargeable batteries contains 0.1-10 parts of each substance selected from 3 groups/categories, i.e., elemental substances or compounds of rare-earth elements, elemental substances or compounds of IVB group elements or elemental substances or compounds of IVA group elements.

3. The high-temperature composite additive for nickel-based chargeable batteries as described in Claim 1 or Claim 2, wherein the said rare-earth element yttrium, ytterbium or erbium element.

4. The high-temperature composite additive for nickel-based chargeable batteries as described in Claim 3, wherein the compound of said yttrium, ytterbium and erbium is Y₂O₃, Y(OH)₃, Yb₂O₃, Yb(OH)₃, ErO₂, Er₂O₃ and Er(OH)₃.

5. The high-temperature composite additive for nickel-based chargeable batteries as described in Claim 1 or Claim 2, wherein the said IVB group elements include titanium and zirconium elements.

6. The high-temperature composite additive for nickel-based chargeable batteries as described in Claim 5, wherein the compound of said titanium and zirconium is Ti(OH)₃, Ti(OH)₂, Ti₂O₃, TiO₂, TiO, Ti₃O₅, Zr(OH)₃, Zr(OH)₂, Zr₂O₃, ZrO₂, ZrO and Zr₃O₅.

7. The high-temperature composite additive for nickel-based chargeable batteries as described in Claim 1 or Claim 2, wherein the said IIA group elements include calcium and magnesium elements.

8. The high-temperature composite additive for nickel-based chargeable batteries as described in Claim 5, wherein the compound of said calcium and magnesium is CaO, Ca(OH)₂, MgO and Mg(OH)₂.

9. The high-temperature composite additive for nickel-based chargeable batteries as described in Claim 1 or Claim 2, wherein the weight part of the components selected from elemental substances or compounds of rare-earth elements, elemental substances or compounds of IVB group elements and elemental substances or compounds of IVA group elements is 0.5-5 parts.
